# EUROPEAN PATENT APPLICATION

(11) **EP 0 904 683 A1**
(43) Date of publication of application: **31.03.1999**
(21) Application number: 98116282.9
(22) Date of filing: 28.08.1998
(51) Int. Cl.: A01D 45/00

(54) **Device for the automatic control of the interference with the ground of the pickup members of a tomato picker**

(30) Priority: 29.09.1997 IT BO970586
(71) Applicant: Guaresi S.p.A., 44010 Pilastri (Ferrara) (IT)
(72) Inventor: Guaresi, Massimiliano, 44010 Pilastri (Ferrara) (IT)
(74) Representative: Porsia, Attilio, Dr.

(57) **Abstract**

The machine is provided with transducing means (29-29'-30-30') which transmit an electric signal proportional to the mechanical stress undergone, during the interference with the ground of the pickup members, by the pickup members themselves (18-18') or by other parts associated to the movable frame (1) carrying such members. Processing means (45) process the signal emitted by said transducing means and compare it with one or more preset reference values and some means are provided so that, if the signal detected differs from said reference value/s, said means control the intervention of means (46) which start up in turn one or more of any means (4, 8, 17) which can change the lifted position of said movable frame, so that said signal emitted by said transducing means goes back within the limit of the reference value/s, thus indicating a correct interference with the ground of the pickup members of the machine.

## Description

The present invention relates to agricultural machinery for tomato-picking or to other types of machinery involving similar requirements, for instance to onion-pickers or similar, or to beetroot-diggers, equipped with operating members which operate in touch with the ground and whose interference with the ground itself needs to be adjusted, so as to ensure that the agricultural products are completely picked, also those in touch with the soil and so as to prevent that the operating members themselves pick up too much ground or that they are stressed in a way which is unsuitable or dangerous to their integrity. For that reason the operating members of the machinery the present invention relates to are fitted onto the lower end of a longitudinally inclined frame, articulated with its upper end to the wagon of the machine with the possibility of pitch and swing, and connected to the wagon itself by means of a pair of lateral hydraulic cylinders, on said lower end of the frame some wheels and/or rollers (see below) being provided, said wheels and/or rollers, when the machine is working, leaning onto the ground to place said operating members with the right level of penetration or of depth. Since the agricultural soil is never flat enough, but it is characterised by the random presence of bumps or humps or of ditches due to the working of atmospheric agents, to the passage of the wheels of agricultural machinery for the tilling of the ground itself or for the treatment of cultures, or at times even necessary to the soil irrigation, and since the wheels and/or the rollers touch portions of ground which are relatively near said operating members but which are not those touched by said members, it follows that, despite the presence of wheels, the operating members themselves of the machine can interfere too much or can even not interfere with the ground, and to this end it is provided that said wheels are fitted onto the correspondent frame through the interposition of some guiding and sliding means or of some swinging levers. It is also provided that the movable parts supporting the wheels are connected to hydraulic jacks, which, through some distributors placed on the driver's seat of the machine, can be selectively operated by an operator, usually the agricultural machine's driver himself, who is exposed, in this case, to a stressful activity. The great distance between the operating members of the machine and the driver's seat, the light conditions which are not always advantageous and the operator's ability, which is not always adequate or constant, make the correction of the altimetric position described before problematic.

The present invention aims at automating the correction of the altimetric position of the operating members of a tomato picker or of any other agricultural machinery involving similar requirements.

In order to solve analogous problems, the known technologies provide the use of feeler pins or contact sensors, which should be fitted onto the frame whose position needs to be adjusted, and which operate in touch with the ground, usually before the operating members of the machine and as near these as possible and connected to transducers, micro-switches, or which make use of ultrasound or X-ray emitters or of laser emitters, with the correspondent receivers, and connected to such an elaboration circuit that it is possible to detect in real time the altimetric variations of the ground in relation to the frame and as far as the feed speed of the machine is concerned, it is possible to provide for the automatic correction of the position of the frame itself and of the operating members at the exact moment when these members pass onto the ground portion explored in advance. This solution, however, cannot apply to the machinery of the present invention since, because of the peculiar entangled, falling and deformed nature of the tomato plants, the contact sensor should be kept at suitable distance from the plants themselves, and it should operate in the space between the plant rows and would therefore detect an altimetric situation of the ground which would not mirror the one we are interested in, which really exists beyond the plants themselves. Ultrasound, X-ray emitters or similar equipment, if placed before the pickup tip, would be influenced by the presence of the plant distorting the reading, whereas, if placed laterally would detect altimetric positions which do not correspond to the working area, and, if placed behind, would detect altimetric positions which are delayed in comparison with the pickup members and would be positioned in a place where the presence of foreign bodies difficult to eliminate would prevent their correct working.

The present invention aims at solving the aforesaid technical problem by means of the following solution idea. When the operating members of the machine interfere with the ground, these members and the structural parts connecting them to the swinging frame and/or the parts operating them, undergo mechanical stresses which can be detected by means of adequate transducers of the known type, for instance by means of the so-called load cells, which transmit an electric signal which is proportional to the mechanical stress they undergo. If the operating members of the machine do not interfere with the ground or if they interfere with it to a limited extent, the transducer emits a proportional electric signal identifying this condition. Since the operating members of the machine are relatively large, at least two transducers or two groups of transducers symmetrically placed are used, in order to detect the stresses which said members undergo in correspondent symmetrical portions of their width. By means of an electronic circuit easy to carry out and highly reliable from the technological tip of view, the electric signal transmitted by said transducers is compared with prearranged maximum and minimum threshold values, and, if it is not within such values, the circuit itself demands the intervention of an interface operating onto an electrodistributor providing for the selective correction of the altimetric position of the operating members of the picker.

Further features of the present invention and the advantages deriving from them will become more evident from the following description of a possible form of embodiment of the same, shown as a mere, non-limiting example, in the figures of the two drawing tables enclosed, where:
- Figure 1 is a schematic view with lateral elevation of the operating members of a typical tomato picker, to which the improvements described here are particularly assigned;
- Figure 2 is a top plane view of the main operating member of the picker of Figure 1, onto which the transducers detecting mechanical stresses have been fitted, and shows, divided into sectors, the circuit detecting and elaborating the signals produced by the transducers and operating the hydraulic jacks which automatically adjust the altimetric position of the frame with said operating member;
- Figure 3 shows some fitting details of one of the transducers placed on the operating member of Figure 2, detected according to section II-III.

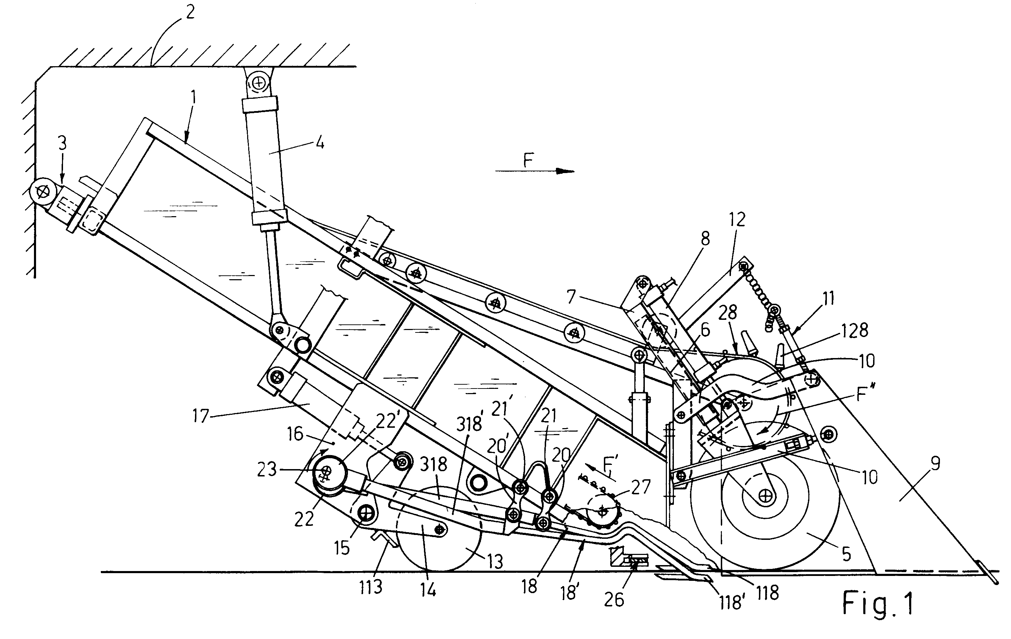

In Figure 1 the numeral 1 indicates the longitudinally inclined frame, which is connected, with its upper end, to the front part of the wagon 2 of the picker, with the interposition of a composite articulation which allows the frame itself to oscillate both with swings and pitches, said frame 1 being connected to the wagon by means of a pair of lateral hydraulic jacks 4, one only of which can be seen in the figure. The frame 1 is longitudinally lined up with the wagon 2 which moves in the direction indicated by the arrow F. When the machine is moving to reach a different place, the jacks 4 are behind and the frame 1 is lifted from the ground. When, on the contrary, the machine is working, the jacks 4 are stretched and the low front part of the frame 1 places itself at a short distance from the ground so as to lean onto the ground at least one pair of wheels 5 (and/or of other means), placed in front of and laterally to the frame 1, each fitted onto the lower end of a slide 6 suitably inclined in comparison with the vertical line, which slides in a guide 7 fixed to the frame 1 and which is connected to an hydraulic jack 8, by means of which it is possible to adjust from a distance the lower projection level of the wheels 5 and it is consequently possible to adjust the distance from the ground of the front lower end of the frame 1, onto which end the operating members of the picker are positioned. The wheels 5, usually equipped with tyres, slide in the space between the cultivation rows and are protected by respective shaped wrappings 9 which convey the plants interfering with them towards the operating members of the machine. The wrappings are supported by a pair of arms 10 articulated in a parallelogram shape to the frame 1 and they are connected by means of a chain and of an adjustable tie-rod 11 to an above stand fixed to the frame 1 as well. When the machine is in the operating position, the wrappings 9 creep on the ground and suit themselves to its altimetric variations by means of the arms 10. In order to allow the machine to operate correctly even on wet soils, which would tend to stick to the wheels 5, thus increasing their diameter and distorting the height position of the frame 1, instead of the wheels which are lifted, some rollers 13, preferably motorised, are used, placed in the lower part of the frame 1, behind the hereinafter said pickup operating members, equipped with mud-scraping blades 113 and supported by levers 14 pivoted in 15 to stands 16 and controlled by hydraulic jacks 17 anchored to the frame 1.

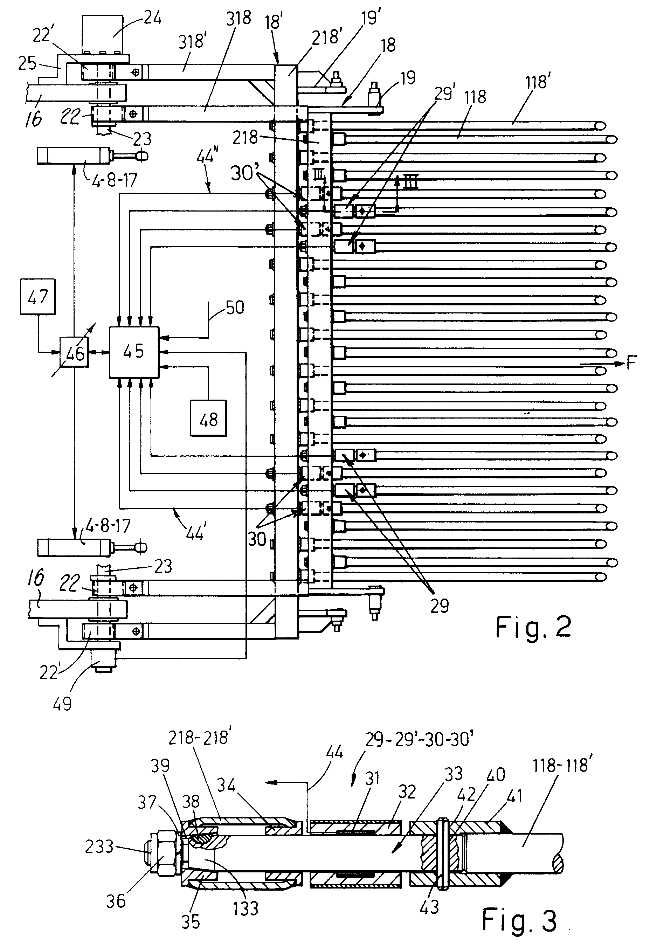

The pickup members of the machine include, first of all, a pair of combs 18-18', with the tips 118-118' adequately profiled as in Figure 1, oriented in the feed direction of the machine itself, alternated as appears from Figure 2 and integral with ledgers 218-218' placed one onto the other, with a correct reciprocal distancing and which, by means of end stands 19-19', are articulated to small connecting rods 20-20' oriented upwards and articulated themselves in 21-21' to the frame 1. At the same ends of the ledgers 218-218' some arms 318-318' are fixed, oriented in the opposite direction to the tips, which, with their free ends, are rotatingly fitted onto cams 22-22' fitted with angular phase shift of 180°C onto a shaft 23 rotating supported by the stands 16 fixed to the frame 1 and which is constantly turned by a hydraulic engine 24 flanged on a stirrup fixed onto one of the stands 16. The tips of the combs 18-18' should touch the ground and they should preferably penetrate into the ground itself so as to pick up also those tomatoes which have fallen, and, by effect of the rotation of the shaft 23, they make a composite forth-back and down-up movement which lets them comb the plants and prepare them in the best condition as possible for the base cut operated by a scything bar 26 placed obliquely, below and in the intermediate part of the tips of the combs, as schematically represented in Figure 1. The tips of the combs are bent in a "Z" shape so as to form an intermediate gap where the end of a grilled conveyer is placed, whose upper arm moves in the direction indicated by the arrow F' in order to pick up and carry away the plants and the fruits picked up by means of the combs 18-18' and of the bar 26. The ground which might follow the picked products falls through the openings running between the combs and the conveyer components 27.

To complete the picker there is a conveyer 28 with a large opening grate, longitudinally placed in the upper part of the frame 1, which starts operating before and above the combs, which, with its lower arm, follows the direction indicated by the arrow F'' and which is equipped with extensions 128, distorted and coated with elastomeric material, so as to force the plants to place themselves correctly in relation to the pickup members and to fall correctly onto such members.

Within reach of the driver's seat of the machine are provided the controls allowing the operator to operate the jacks 4, so as to lift or lower selectively the jacks 8 or 17 in order to adjust the altimetric position of the pickup members.

In order to adjust automatically the working depth of the combs 18-18', by means of the jacks 8, 17 or by other means (see below), the following solution, which will now be described with reference to the Figures 2 and 3, has shown promising results. On the back end of the third and fourth tip of the combs 18-18', counted starting from each side of the combs themselves, at a short distance from the supporting girder of such tips, load cells 29-29' and 30-30' have been placed: said cells are identical and their function is to detect the mechanical stress undergone by such tips during the interference with the ground. From the detail in Figure 3 it can be seen that the load cells are characterised by the fact that they have the extensometer and/or other suitable transducer 31, protected by a composite and armoured body 32, fixed in the intermediate part of a cylindrical bar 33, which, with its end portion, is fixed to the comb ledger, for instance by means of a cylindrical bushing 34 fixed on the front of the ledger and by an internally tapered bushing 35 fixed on the back front of the ledger itself, with which said bar co-operates with its conical portion 133 and from which the bar itself projects with its tapered and threaded end portion 233, onto which a nut 36 is screwed, said nut having an elastic washer 37 so as to block firmly the bar in such conical bushing. Since the tips need to be oriented, the conical portion 133 of the bar 33 is equipped with a recess housing a key 38 which can co-operate with a longitudinal keyway 39 provided within the conical bushing 35. The front portion of the bar 33 is equipped on its end with a transversal through hole 40, and on said hole is precisely inserted a bushing 41 welded onto the back end of the tip 118 or 118' of the comb, said tip being appropriately shorter than the other because of the presence of the cell. The bushing 41 is equipped, on the portion involving the bar 33, of a through hole 42, which is lined up with said hole 40 of the bar 33 and in the aforesaid holes an elastic pin 43 is inserted, said pin fixing firmly the tip to the load cell assembly.

Comparing the figures 1 and 2 it is evident that the load cells will be placed under the conveyer 27, far from the pickup front of the machine and, therefore, in a protected position. In Figure 3, the numeral 44 indicates the electric wire connected to the load cell, which conveys the modulated electric signal from the cell when the bar 33 is mechanically stressed. Figure 2 shows that the cells on the right 29-30 and those on the left 29'-30' are connected through the electrical connections 44' and 44'' to an electronic processing unit 45, which is not shown in detail because it can easily be carried out by those skilled in the art, and which processes the signals coming from the cells and compares them with reference values, for instance with preset minimum/maximum threshold values, indicating respectively that the tips of the combs are not stressed because they are not touching the ground, or that the same are stressed in a peculiar way because of an excessive interference with the ground itself, said electronic unit, when these values are exceeded, controlling the automatic intervention of a hydraulic interface 46 connected to a hydraulic exchange 47, preferably equipped with proportional electrodistributors or electrodistributors of any other type, and connected or selectively connectable to the hydraulic jacks for the adjustment of the altimetric position of the pickup members, for instance to the jacks 8 of the front wheels, or to the jacks 17 of the back rollers, or to the jacks 4. The cells on the right will serve the jacks on the right and those on the left the jacks on the left, independently one from the other or with suitable interaction according to a preset algorithm. If the load cells transmit a signal exceeding the minimum threshold, the frame 1 is progressively lowered till said signal goes back to the preset threshold values. If, on the contrary, the signal transmitted by the cells exceeds the maximum threshold, he frame 1 is progressively lifted till said signal goes back to the preset threshold values.

The use of two groups of cells on each right and left area of the combs allows the detection of signals with more information and makes it possible to operate with safety even in case of damage to one of the cells in each group. In order to optimise the working of the system, the aforesaid position correction can be connected to the feed speed of the machine, so as to determine preset and adjustable detection rates, which are useful to minimise the position corrections for better work performances, at the same time limiting the wear of the system. For this reason, the elaborating system 45 is preferably connected to an encoder 48 detecting the linear feed speed of the picker.

In order to prevent that the system is misled because of false signals, it is preferably provided that the same processing system 45 is connected to an encoder 49, fitted onto the shaft 23, which detects the eccentric phase so that the processing unit itself considers, only or in particular, those signals emitted from the cells when the combs are in a particular and meaningful working position. Always from Figure 1 it can be seen that the processing unit is connected in 50 to a micro, not shown, which changes its state each time the frame 1 is lifted in the resting position and which controls the resetting of the system. In such a condition, the processing unit detects the signal transmitted by the cells at rest and resets itself on the value of this signal. If the detected signal is of an unsuitable entity, which indicates a bad working of the cell, the means to indicate such condition are provided. In case of serious damage or of conditions which do not allow the use of the automatic adjustment system which we are dealing with, some means are provided, whose function is to disconnect the system itself and which allow to go on working manually on the distributors controlling the altimetric position and the frame position 1.

It is obvious that the description has related to a preferred form, though not the only possible one, of embodiment of the present invention, to which several variations and changes in the carrying out can be brought. The load cells, carried out in any known way and also differently from the hypothesis shown in Figure 3, can be placed in any other place of the pickup members or of the parts supporting these members. For instance, the load cells can be placed on or in the ledgers 218-218' of the combs, or on the arms 318-318' connecting the combs to the movement eccentrics, or on the eccentrics 22-22', or on the connecting rods 20-20' or on the joints of the rods themselves, or in the articulating tips of the jacks 4, 8 and 17 to the relative supporting portions, or placed in any other position from which the mechanical stresses induced by the interference (or lack of interference) with the ground of the pickup members of the machine can be inferred. These and all those equivalent technical solutions, which can be guessed by those skilled in the art, fall into the boundaries of the present invention, as described above, as shown and as claimed below. In the claims, the references in brackets are merely indicative and non-limiting of the protection boundaries of the claims themselves.

## Claims

1. Device for the automatic control of the interference with the ground of the pickup members of a tomato picker or of any other agricultural pickers, involving similar requirements of altimetric adjustment, in which said pickup members are fitted onto a frame (1) connected to the wagon (2) of the machine with the possibility of swing and pitch movement and equipped with means (4, 8, 17) which allow to modify its lifted position, characterised in that it includes:
- transducing means (29-29'-30-30') to detect the mechanical stress and the variations of the stress itself undergone, during the interference with the ground of the pickup members (18-18') of the machine, by the pickup members themselves and/or other parts correlated to said movable frame (1) which supports such pickup members, said transducing means being able to transmit a signal, for instance an electric one, proportional to said mechanical stress;
- means (45) to process the message transmitted by said transducing means and to compare it with one or more preset reference values, some means being provided so that, if the detected signal differs from said reference value/s, said means control the automatic intervention of means (46) which control the starting up of one or more of any means (4, 8, 17) which are able to change the lifted position of said movable frame (1), so that said signal transmitted by said transducing means goes back to the limit of the reference value/s, indicating a correct interference with the ground of the pickup members of the machine.

2. Device according to claim 1), in which there are at least two transducing means (29-29'-30-30') detecting the mechanical stress undergone, because of the interference with the ground, by the pickup members of the machine or by other members or parts of the movable frame (1) supporting the pickup members themselves, said transducing means being placed in correspondent preferred positions symmetrically positioned to the longitudinal axis of the machine, being provided that the signal of the unit nearer the right side controls the altimetric adjustment of the means (4, 8, 17) connected to the right side of the movable frame (1) and the unit near the left side controls the altimetric adjustment of the means (4, 8, 17) connected to the left side of the same movable frame with the pickup members of the machine.

3. Device according to the previous claims, in which the transducing means used (29-29'-30-30') are load cells.

4. Device according to the previous claims, in which the load cells (29-29'-30-30') are fitted onto some tips of at least one or preferably both swinging combs (18-18') interfering with the ground, in such a position that the cells themselves do not interfere with the picked up products.

5. Device according to claim 4), in which there are four load cells fitted onto each comb, said cells being divided into groups of two and having a symmetrical position, with the purpose of allowing the detection of a signal rich with information and to allow the device itself to work even in case of failure of one cell of each group.

6. Device according to claim 5), in which the load cells are fitted, for example, onto the third and fourth tip of the combs, starting from every side of the combs themselves (18-18').

7. Device according to claim 4), in which the load cells are connected to the ledger (218-218') of the floating combs (18-18') and are such to support the corrisponding of the combs themselves.

8. Device according to claim 4), in which the load cells have, for instance, the transducer (31) in the intermediate portion of a cylindrical bar (33), said transducer being protected by an armoured jacket (32) from which the electric wire (44) comes out to convey the signal modulated by said transducer, one end of said bar being prearranged so as to be fixed to the ledger of the comb, preferably in a movable position and with a preset direction, while on the other end of said bar a bushing (41) is inserted with enough precision, in said bushing being partially inserted and welded the tip end of the comb, such parts being equipped with respective transversal holes, preferably through holes (40, 42), in which an elastic peg or another suitable axially blocking and fitting mean (43) can be inserted.

9. Device according to claim 8), in which the ledger (218-218') of the combs (18-18') is prearranged for the support of the bars (33) with the load cells by means of opposed bushings, axially lined up, the front bushing (34) being cylindrical and in it being inserted with enough precision said bar, whereas the back bushing (35) is conical inside, diverging forward, and co-operates with a correspondent conical portion (133) of said bar (33) ending with a tapered and threaded portion (233) which projects from the conical bushing and onto which is screwed an axially blocking nut (36) with elastic washer (37), said conical parts being male and female, being equipped respectively with a key (38) and with a longitudinal keyway (39) for the reciprocal fitting, so as to ensure a preset direction to the bar with load cell and, consequently, to the tip of the comb fitted onto such bar.

10. Device according to the previous claims, in which the load cells (29-29'-30-30') are connected to an processing electronic unit (45) equipped with means to elaborate the signals transmitted by said cells and equipped with comparison means comparing the processed signals with minimum and maximum threshold values, outside which said unity controls the starting up of a hydraulic interface (46) connected to a hydraulic exchange (47) and equipped with proportional electrodistributors or electrodistributors of any other type, which progressively adjusts the altimetric position of the movable frame (1) of the machine, till it brings the signal transmitted by the load cells back inside said threshold values.

11. Device according to claim 10), in which the processing electronic unit (45) is equipped with means to carry out cyclical adjustments, with rate proportioned to the feed speed of the machine, the unit itself being connected to this end to an encoder (48) which outputs an electric signal proportional to the linear feed speed of the picker.

12. Device according to claim 10), in which the processing electronic unit (45) is equipped with means allowing it to evaluate actively the signals transmitted by the load cells, at the moment when the combs (18-18') are in a preset and meaningful working position, the unit itself being connected to this end to an encoder (49) fitted onto the cinematic chain operating said combs.

13. Device according to claim 10), in which the elaborating electronic unit is connected to a micro detecting the lifted position at rest of the frame (1) of the machine with the pickup members, such means being provided that, when said micro is operated, said electronic unit resets itself according to the values each time detected by the signals of the cells at rest, means being provided to indicate possible cells failures.

14. Device for the automatic control of the interference with the ground of the pickup members of a tomato picker or of other pickers involving similar requirements, equipped with load cells and/or other suitable transducers to detect the variations in the mechanical stress undergone, during the interference with the ground of the pickup members, by the pickup members themselves or by other parts associated to the movable frame (1) with such members, the load cells themselves being fitted, for instance, onto the tips of the pickup combs (18-18'), or onto the ledgers (218-218') of such combs, or onto the arms (318-318') connecting the combs to the movement eccentrics, or onto the eccentrics (22-22'), or onto the connecting rods (20-20') of the combs, or onto the joints of said rods, or onto the articulation tips to the relative stands of the jacks (4, 8, 17) controlling the position of said movable frame (1).
